(19) Europäisches Patentamt
European Patent Office
Office européen des brevets

(11) Publication number: 0 102 712
B1

# (12) EUROPEAN PATENT SPECIFICATION

(45) Date of publication of patent specification: 22.03.89

(51) Int. Cl.$^4$: C 23 F 11/06, B 01 D 53/14

(21) Application number: 83304039.7

(22) Date of filing: 12.07.83

## (54) A process for preventing corrosion in alkaline systems.

(30) Priority: 14.07.82 US 398077
10.06.83 US 503061

(43) Date of publication of application:
14.03.84 Bulletin 84/11

(45) Publication of the grant of the patent:
22.03.89 Bulletin 89/12

(84) Designated Contracting States:
BE DE FR GB IT NL

(56) References cited:
DE-A-2 046 817
FR-A-1 095 978
FR-A-2 408 662
US-A-4 112 050
US-A-4 112 051

WERKSTOFFE UND KORROSION, vol. 32, no. 10, R178, abstract no. 81-2419, October 1981, Weinheim, DE
J.C. Bailar, Comprehensive Inorganic Chemistry, Vol. 2, page 926

(73) Proprietor: Exxon Research and Engineering Company
P.O.Box 390 180 Park Avenue
Florham Park New Jersey 07932 (US)

(72) Inventor: Foroulis, Zisis Andrew
33 Franklin Road
Mendham New Jersey 07945 (US)

(74) Representative: Pitkin, Robert Wilfred et al
ESSO Engineering (Europe) Ltd. Patents & Licences Apex Tower High Street
New Malden Surrey KT3 4DJ (GB)

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 102 712 B1

**Description**

This invention relates to a process for removing acidic gases from a gaseous stream containing such gases.

The sweetening of natural and synthetic gases has been practised for many years. Typically this has involved the removal of acidic compounds such as $CO_2$, $H_2S$ and COS by absorption of the acid gases in a liquid absorbent medium. Various aqueous, absorbing or scrubbing solutions have been utilized to remove the acidic components including alkanolamines, sulfolane (2,3,4,5 - tetrahydrothiophene - 1,1 - dioxide), 2,3,4,5 - tetrahydrothiophene - 1,1 - dioxide with diisopropanol amine, and potassium carbonate solutions. Each of these systems experiences corrosion which may be attributable to one or more of the following: decomposition of the scrubbing solution; reaction of the acidic components of the gas and the absorbent; and direct attack of the acidic components in the gases. This corrosion may occur throughout the entire gas treating system contacted by scrubbing solution and acid gas.

U.S. Patent No. 3,887,330 discloses a method for preventing sulfur corrosion of ferrous materials in pipelines wherein ammonium polysulfide as an aqueous solution is mixed with an essentially non-aqueous sulfurhydrocarbon slurry. The ammonium polysulfide may be externally added or may be formed by reaction of ammonium hydrosulfide with free sulfur in the slurry.

U.S. Patent No. 3,438,680 describes a similar method for transporting sulfur particles through a pipeline wherein sulfur particles are intimately mixed with an aqueous solution of a polysulfide salt to form a slurry, the slurry is pumped through a pipeline and the sulfur particles are removed from the aqueous solution. The polysulfide salt used as carrier is reported to prevent corrosion.

Use of alkali metal sulfides *per se* as corrosion inhibitors in ammonium nitrate-urea deicer compositions is reported in U.S. Patent No. 3,297,577.

For some gas treating processes, i.e., those characterized as hot carbonate processes, hydrogen sulfide gas is a known corrosion inhibitor; see Bienstock et al., *Corrosion, 17,* 571 (1961), Benson et al., *Petroleum Refiner, 39,* 127 (1960) and a pamphlet from the U.S. Dept. of the Interior Bureau of Mines, "Removing Hydrogen Sulfide by Hot Potassium Carbonate Absorption", by Field et al. (1954). However, for most gas treating processes using aqueous amine solutions, $H_2S$ per se is not an effective corrosion inhibitor. Process designs of this type are well known to limit the acid gas content of such solutions to minimize corrosion.

In FR—A—1095978 there is disclosed a procedure for protecting ferrous metals from the formation of pustules and fissures caused by hydrogen, more especially in a petroleum installation in contact with strong acids or gases such as hydrogen, hydrogen sulphide and carbon oxides. The procedure involves the injection of a water-soluble polysulphide into the installation.

In FR—A—2408662 corrosion inhibition compositions are disclosed for use in gas scrubbing solutions. The composition consists of (i) copper or a copper compound, (ii) an oxidising agent which in the presence of sulphur or sulphur generating compound wil convert sulphur to atomic sulphur and/or oxidise copper to copper ions and (iii) an alkanolamine. The composition is effective if hydrogen sulphide is present in the gaseous stream to be scrubbed.

In the processing of gas mixtures in the oil, chemical and coal industries, acidic compounds frequently must be removed from the gas stream. As used hereinafter the term acid-containing gases includes $CO_2$ as well as $H_2S$, $SO_2$, $SO_3$, $CS_2$, HCN, COS and the oxygen and sulfur derivatives of $C_1$ to $C_4$ hydrocarbons as they frequently appear in gaseous mixtures. Except for $CO_2$ and $H_2S$, these gases normally are present only in small amounts within a gaseous mixture or feed.

Although it is believed that the subject invention will have applicability to a wide variety of acid gas scrubbing solutions, the present invention is especially applicable to aqueous alkaline systems, such as an aqueous absorbing solution comprising an alkaline material selected from alkali metal salts, alkali metal hydroxides and amines. The subject invention is particularly applicable to amine-promoted alkaline salt scrubbing solutions or amine-containing scrubbing solutions and is more particularly applicable to sterically hindered amine scrubbing solutions.

According to the present invention there is provided a process for removing acidic gases from a gaseous stream containing the same, wherein said gaseous stream is contacted at an elevated operating temperature with an amine-containing scrubbing solution containing an effective amount of an additive to inhibit corrosion of metal contacted by the scrubbing solution, characterised by:

(1) the scrubbing solution comprising either

(A) an amine, or

(B) at least one alkali metal salt or hydroxide and an activator therefor selected from (i) compounds having the structure

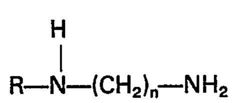

where R is a secondary or tertiary alkyl group and n is the integer 2, 3 or 4.

(ii) compounds having the structures

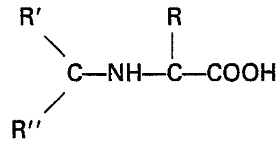

or

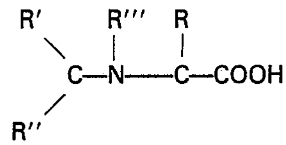

wherein R is hydrogen or methyl, and R′ and R″ are each selected from:

(a) substituted or unsubstituted, linear or branched alkyl radicals having one to twenty carbon atoms; or

(b) substituted or unsubstituted alkylene radicals together having three to six carbon atoms and combined to form a cyclic ring; or

(c) substituted or unsubstituted cycloalkyl radicals having from four to eight ring carbon atoms; or

(d) substituted or unsubstituted hydroxyalkyl radicals, linear or branched, having from one to twenty carbon atoms; or

(e) substituted or unsubstituted aralkyl radicals having from seven to twenty carbon atoms, and where R‴ is selected from substituted or unsubstituted linear alkyl radicals having from one to twenty carbon atoms; and

(2) the corrosion inhibitor comprising either (a) an ammonium or alkali metal polysulphide or (b) a mixture of an ammonium or alkali metal sulphide and elemental sulphur.

When the corrosion inhibitor employed in the invention is an alkali metal polysulphide then it preferably is of the formula:

$$(NH_4)_2S_x \text{ or } (M)_2S_x$$

wherein M is an alkali metal such as Na or K and x is an integer from 2 to 8.

The corrosion inhibitor alternatively may comprise a mixture of an ammonium or alkali metal sulfide, such as $Na_2S$ or $K_2S$, and elemental sulfur in relative proportions so as to prevent corrosion of said metals.

The alkaline solution preferably comprises an absorbing solution comprising water and an alkaline material selected from alkali metal salts, alkali metal hydroxides and amines. The alkaline absorbing solutions preferably may be utilized for removing acidic compounds from gases. In such an application, the concentration of the polysulfide salt, expressed as weight of total elemental sulfur in the absorbing solution, may range from about 0.01 wt.% to about 6.0 wt.%, preferably from about 0.05 wt.% to about 0.6 wt.%.

One aqueous acid gas scrubbing solution for use in the invention suitably comprises an alkali metal salt, the promoter therefor, and about 0.01 to 6% by weight of the polysulfide salt, expressed as total sulfur, or a mixture of 0.001 to 20% by weight of an ammonium or alkali metal sulfide and 0.0005 to 10% by weight of the elemental sulfur, said percentages being based on total weight of the solution.

The application of this invention is described in two series of tests. One series shows the effectiveness of absorbing solutions containing alkali metal salts and an activator therefor while the second series shows effectiveness of aqueous amine solutions. In the first series the scrubbing solution comprises an aqueous solution having a basic alkali metal compound selected from alkali metal bicarbonates, carbonates, hydroxides, borates, phosphates and their mixtures, the alkali metal compound preferably being present as about 10 to about 40 weight percent of the entire weight of the solution. Most preferably, potassium carbonate is used in a concentration of about 20 to 35 weight percent.

Preferably, the processes of this invention are carried out at temperatures of 37.8—148.9°C, more preferably 65.6—121.1°C.

When the activator has the aforedefined structure:

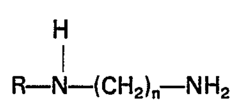

then the preferred activators are N - cyclohexyl - 1,3 - propanediamine (CHPD); N - cyclohexyl - 1,2 - ethanediamine (CHED); N - cyclohexyl - 1,4 - butanediamine (CHBD); and N - cyclohexyl - 1,5 - pentanediamine. U.S. Patent No. 4,112,050 discloses the use of aqueous solution comprising a basic alkali metal salt or hydroxide and a sterically hindered diamine activator for removing acid gases from a gaseous mixture.

When the activators have the afore-defined structures:

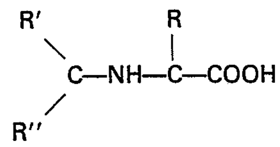

or

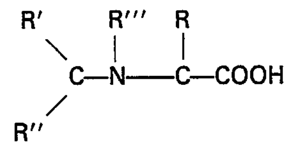

then the mole ratio of the two amino acids may widely vary, but preferably ranges from 1:3 to 3:1, and more preferably about 1:1.

The preferred amino acids will be those where R is hydrogen or a methyl radical, and R′ and R″ are each selected from $C_1$—$C_6$ hydrocarbon radicals and R‴ is a methyl or ethyl radical. The most preferred amino acids will be those where R is hydrogen, R′ and R″ are each selected from $C_1$—$C_3$ hydrocarbon radicals, and R‴ is a methyl radical. A particularly preferred mixture includes N-secondary butyl glycine (SBG) and N-secondary butyl N-methyl glycine (MSBG).

The activators described hereinabove preferably are present in concentrations of about 0.5 to about 20 weight percent, more preferably from about 0.5 to about 15 weight percent, and most preferably from about 1 to about 10 weight percent.

It has been found that while the above-noted activators improve the working capacity of acid scrubbers over the prior art, the efficiency of certain of these absorbing solutions declines in alkaline scrubbing systems at high temperatures and at low concentrations of the acid gas in the solution due to phase separation. However, it also has been found that phase separation does not occur in absorbing or scrubbing solutions utilizing SBG or MSBG activators. Thus, a cosolvent preferably is added to all the above-noted absorbing solutions to prevent phase separation except for those utilizing SBG and MSBG. The preferred cosolvents are amino acid cosolvents, with the more preferred being amino acid cosolvents having from 4 to 8 carbon atoms. One of the preferred cosolvents is pipecolonic acid (PA). The content of the amino acid cosolvent in the absorbing solution will range from about 0.5 to about 15 weight percent, with the preferred range being about 1 to about 10 weight percent.

In the second series of tests for application of this invention the scrubbing solutions comprises an aqueous solution of an amine compound, as described, e.g., in U.S. Pat. Nos. 4,112,051 and 4,112,052. Examples of amines which would be satisfactory for this purpose are those known for removing acid gases such as $H_2S$ and $CO_2$. Preferred such amines are alkanolamines, including both not limited to monoethanolamine (MEA), diethanolamine (DEA), dipropanolamine (DPA), hydroxyethoxyethylamine (DGA), diisopropanolamine (DIPA), methyldiethanolamine (MDEA), diethylmonoethanolamine (DEAE), and the like. One of the preferred such amines herein is monoethanolamine. In addition, the amine may be a sterically hindered amine such as those described for removal of acidic gases in U.S. Pat. Nos. 4,112, 051 and 4,112,052 and including 2-piperidine ethanol (PE), and the like.

In addition, the amine may be a severely sterically hindered amine such as the secondary aminoether alcohol where the nitrogen atom of the amino moiety is attached to one or more bulky carbon groupings described in EP—A—0087208, corresponding to US—A—4405585 filed January 18, 1982 to G. Sartori et al. Typically such alcohols have a degree of steric hindrance such that the cumulative $-E_s$ value (Taft's steric hindrance constant) is greater than about 1.75 as calculated from the values given for primary amines in Table V in D. F. DeTar, *Journal of Organic Chemistry, 45,* 5174 (1980). Another means for determining the severe steric hindrance of this aminoalcohol is by measuring its $^{15N}$nuclear magnetic resonance (NMR) chemical shift. The chemical shift of the severely sterically hindered secondary aminoether alcohols is greater than about δ+40 ppm when a 90% by weight amine solution in 10% by weight $D_2O$ at 35°C is measured by a spectrometer using liquid (neat) ammonia at 25°C as a zero reference value. Useful such alcohols herein are those of the general formula:

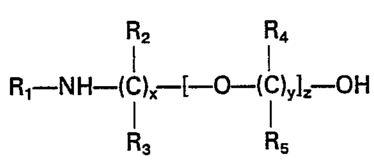

wherein $R_1$ is selected from primary alkyl having 1 to 8 carbon atoms and primary hydroxyalkyl radicals having 2 to 8 carbon atoms, branched chain alkyl and branched chain hydroxyalkyl radicals having 3 to 8

carbon atoms and cycloalkyl and hydroxycycloalkyl radicals having 3 to 8 carbon atoms, $R_2$, $R_3$, $R_4$ and $R_5$ are each independently selected from hydrogen, $C_1$—$C_4$ alkyl and $C_1$—$C_4$ hydroxyalkyl radicals, with the proviso that when $R_1$ is a primary alkyl or hydroxyalkyl radical, both $R_2$ and $R_3$ bonded to the carbon atom directly bonded to the nitrogen atom are alkyl or hydroxyalkyl radicals and that when the carbon atom of $R_1$ directly bonded to the nitrogen atom is secondary at least one of $R_2$ or $R_3$ bonded to the carbon atom directly bonded to the nitrogen atom is an alkyl or hydroxyalkyl radical, x and y are each positive integers independently ranging from 2 to 4 and z is a positive integer ranging from 1 to 4.

Specific non-limiting examples of the severely sterically hindered secondary aminoether alcohols include the following compounds:

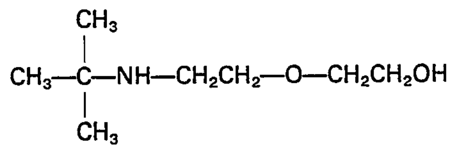

Tertiarybutylaminoethoxyethanol

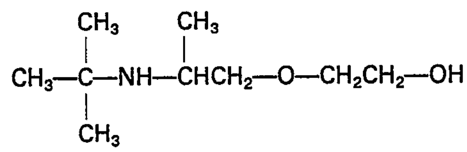

2 - (2 - tertiarybutylamino)propoxyethanol

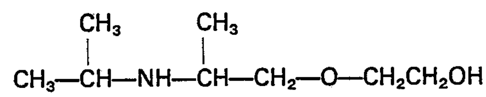

2 - (2 - isopropylamino)propoxyethanol

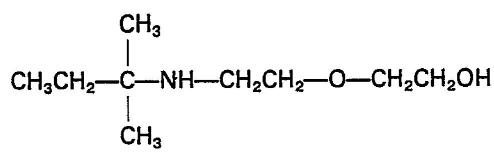

Tertiaryamylaminoethoxyethanol

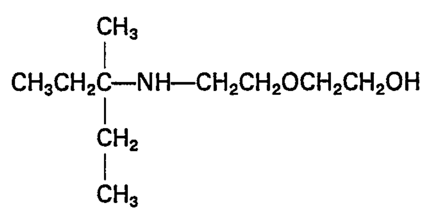

(1 - methyl - 1 - ethylpropylamino)ethoxyethanol

These aminoether alcohols, which are particularly useful in the process of selective $H_2S$ removal, have a $pK_a$ value at 20°C greater than 8.6 for this use, preferably greater than about 9.5, and more preferably the $pK_a$ value of the amino ether alcohol will range between about 9.5 and about 10.6. If the $pK_a$ is less than 8.6 the reaction with $H_2S$ is decreased, whereas if the $pK_a$ of the aminoalcohol is much greater than about 10.6, an excessive amount of steam is required to regenerate the solution. Also, to ensure operational efficiency with minimal losses of the aminoalcohol, the aminoalcohol preferably has a relatively low volatility. For example, the boiling point of the amine (at 760 mm) is typically greater than about 180°C, preferably greater than 200°C, and more preferably greater than 225°C.

If the absorbent solution contains an amine as described above, and more specifically if it contains a sterically hindered amine, the solution may contain, either as sole solvent or as the cosolvent with water, a physical absorbent (as opposed to the amines, which are chemical absorbents). Suitable such physical absorbents are described in U.S. Pat. No. 4,112,051 and include, e.g., aliphatic acid amines, N-alkylated pyrrolidones, sulfones, sulfoxides, glycols and the mono- and diethers thereof. The preferred physical absorbents herein are sulfones, and most particularly, sulfolane.

The amine-containing absorbent solution generally has a concentration of amine of about 0.1 to 6

moles per liter of the total solution, and preferably 1 to 4 moles per liter, depending primarily on the specific amine employed and the solvent system utilized. If the solvent system is a mixture of water and a physical absorbent, the typical effective amount of the physical absorbent employed may vary from 0.1 to 5 moles per liter of total solution, and preferably from 0.5 to 3 moles per liter, depending mainly on the type of amine being utilized. The dependence of the concentration of amine on the particular amine employed is significant because increasing the concentration of amine may reduce the basicity of the absorbent solution to below an effective level. It is important, therefore, that the proper concentration level appropriate for each particular amino compound be maintained to ensure satisfactory results.

The scrubbing solution used in the present invention may include a variety of additives typically employed in selective gas removal processes, e.g., antifoaming agents, antioxidants, and the like. The amount of these additives will typically be in the range that they ar effective, i.e., an effective amount.

Also the amines described herein may be admixed with other amines as a blend. The ratio of the respective amino compounds may vary widely.

The corrosion inhibitors which are used in the present invention are soluble ammonium or alkali metal polysulfides, preferably of the general formula:

$$(NH_4)_2S_x \text{ or } (M)_2S_x$$

wherein M is an alkali metal such as sodium or potassium and x is an integer from 2 to 8, preferably from 2 to 5. Most preferably M is sodium.

The polysulfide salts may be added to the aqueous medium externally or a mixture of a soluble ammonium or alkali metal sulfide such as $Na_2S$, $K_2S$, $(NH_4)_2S$ or the like and elemental sulfur may be added to the system. Most preferably, the sulfide is sodium sulfide.

If the polysulfide salt is being added externally to the aqueous solution it may be prepared by dissolving ammonium hydroxide or an alkali metal hydroxide such as NaOH or KOH and an ammonium or an alkali metal sulfide such as $Na_2S$ or $K_2S$ in water. This is followed by slow addition of elemental sulfur and mixing in the absence of air. It will be understood that other methods of preparing the polysulfide are possible and that the polysulfide may be added as a solution to the aqueous medium in which it will be employed.

If the mixture of sulfide salt and sulfur is being added externally to the aqueous solution the amounts effective to prevent corrosion are preferably as follows: the preferred amount of ammonium or alkali metal sulfide added is between 0.001% (1000 ppm) and 20% by weight of the total solution, and the preferred amount of elemental sulfur is between 0.0005% (500 ppm) and 10% by weight of the total solution. More preferably, the amounts are between 0.10% and 1.2% by weight of the total solution for the sulfide salt and between 0.05% and 0.6% by weight for the sulfur.

The concentration of the polysulfide salt in an alkaline aqueous solution effective to reduce corrosion, expressed as total sulfur, will preferably range between about 0.01 wt.% and about 6.0 wt.%, more preferably between about 0.05 wt.% and about 0.6 wt.%, by weight of the total solution.

The solvent employed in the solution herein is preferably water, but may also be a mixture of water and a cosolvent such as pipecolinic acid, as described above, for the hot carbonate application, or a mixture of water and a physical absorbent such as sulfolane or merely the physical absorbent for the amine application.

It is noted that preferably the contacting of the corrosive gases with the solution occurs at an elevated operating temperature such as the boiling point of the alkaline solution or higher temperatures. To improve inhibitor film stability one may, if desired or necessary, circulate an inert gas such as nitrogen for from two or three hours to several days at room temperature or at elevated temperatures, depending on the severity of the corrosion conditions. The exact time and temperature employed for this purpose will depend, e.g., on the effectiveness of the film obtained. In a preferred embodiment, the alkaline test solution containing the corrosion inhibitor is circulated with nitrogen gas at room temperature for up to 24 hours and then is circulated with $N_2$ at the operating temperature of, e.g., 121°C for up to a week.

The following examples will demonstrate the effectiveness of the present corrosion inhibitor in reducing the corrosion rate of aqueous alkaline solutions below that obtainable in the absence of a corrosion inhibitor. In the examples all parts and percentages are by weight and all temperatures in degrees Celsius unless otherwise noted. In addition, the corrosion rated expressed in the examples represent values obtained from water washing, not honing.

Example 1

External addition of mixture of sulfide salt and elemental sulfur for hot carbonate process

Batch corrosion tests were conducted to determine the effectiveness of various corrosion inhibitors in reducing corrosion. The following tests were conducted using the absorbing solutions (Solutions A and B) comprising the ingredients listed in Table I. Solution A is a control containing no corrosion inhibitor whereas Solution B is representative of the invention. Each solution was tested for corrosion by suspending either a carbon steel test coupon, a stainless steel test coupon, or a carbon steel test probe in each solution and continuously bubbling through the solution 100% by volume $CO_2$ for 140 hours at a rate of 500 cc per minute at atmospheric pressure at the indicated temperature, which represents the boiling

point of the solution. These conditions simulate corrosive conditions in the absorber, the regenerator and in other equipment used in a typical gas-treating operation. The corrosion rates, in mm per year, are indicated in Table I.

TABLE I

| | Solution A (control) | Solution B (invention) |
|---|---|---|
| Ingredients of solution (weight percent): | | |
| potassium carbonate | 28 | 28 |
| N-cyclohexyl-1,3-propanediamine | 7 | 7 |
| pipecolinic acid | 7 | 7 |
| sodium sulfide | 0 | 7.4[a] |
| elemental sulfur | 0 | 0.5 |
| water | 58 | 50.1 |
| Boiling points of solutions (°C) | 103 | 107 |
| Corrosion rates (mm per year): | | |
| Carbon steel (coupon) | 18.796—19.761 | nil |
| Carbon steel (probe) | 19.939 | 0.020—0.041 |
| Stainless steel (coupon) of type 304 composition | 0.183 | <0.0025 |
| Stainless steel (coupon) of type 316 composition | 0.206 | <0.0025 |

[a] If $Na_2S$ is replaced by $Na_2S \cdot 9H_2O$, 10% is employed in the solution rather than 7.4%.

It can be seen that the combination of soluble sulfide and elemental sulfur reduces the corrosion rate below that which is obtained when no inhibitor is employed.

Example 2
External addition of polysulfide salt for hot carbonate process

A solution of polysulfide, designated herein as Solution X, was prepared by first dissolving in 3146 g of distilled water a total of 4 g of solid sodium hydroxide and 90 g of $Na_2S \cdot 9H_2O$ to this solution were slowly added 45 g of flowers of sulfur, and the resultant solution was mixed in the absence of air. The resulting solution was used to prepare several test solutions having the following ingredients:

| | Solution | | | |
|---|---|---|---|---|
| | C | D | E | F |
| Ingredients (% by weight) | | | | |
| potassium carbonate | 28 | 28 | 28 | 28 |
| N-cyclohexyl-1,3-propanediamine | 7 | — | — | — |
| pipecolinic acid | 7 | — | — | — |
| N-secondary butyl glycine | — | 6 | 6 | 6 |
| N-secondary butyl-N-methyl glycine | — | 6.6 | 6.6 | 6.6 |
| Solution X | 35 | 35 | 10 | 20 |
| water | 23 | 24.4 | 49.4 | 39.4 |

Each of the above solutions was tested for corrosion inhibition by suspending a carbon steel test coupon in the test solution and by bubbling continuously for up to six weeks either 100% $CO_2$ or amixture

of 10% $CO_2$ and 90% $H_2$ by volume through the solution at a rate of 500 cc per minute at atmospheric pressure and the boiling point of each solution as indicated in Table II.

The corrosion rates of each solution, in mm per year, were measured after one week, two weeks, three weeks, and four weeks, and for one solution after six weeks, with the results indicated in Table II.

TABLE II

| Test solution | Temperature (°C) | Gas composition | Corrosion rate (mm/year) 1 week | 2 weeks | 3 weeks | 4 weeks | 6 weeks |
|---|---|---|---|---|---|---|---|
| C | 108 | $CO_2$ | <0.025 | <0.025 | <0.025 | <0.025 | |
| D | 108 | $CO_2$ | <0.025 | <0.025 | <0.025 | <0.025 | |
| D | 102 | 10% $CO_2$ 90% $H_2$ | <0.025 | <0.025 | <0.025 | <0.025 | <0.025 |
| E | 102 | 10% $CO_2$ 90% $H_2$ | <0.025 | <0.025 | <0.025 | <0.025 | |
| F | 102 | 10% $CO_2$ 90% $H_2$ | <0.025 | <0.025 | <0.025 | <0.025 | |
| A (Control of Example 1) | 103 | $CO_2$ | 18.796—19.761 | | | | |

The data in Table II show that the corrosion was essentially nil for all solutions tested, as opposed to the control (Solution A of Example 1) which shows substantial corrosion after only 140 hours.

Example 3

External addition of polysulfide salt for amine scrubbing process

Two test solutions having the following ingredients were prepared:

| | Solution G (control) | H (invention) |
|---|---|---|
| Ingredients (% by weight) | | |
| monoethanolamine | 30 | 30 |
| Solution X of Example 2 | 0 | 35 |
| Water | 70 | 35 |

Each of the above solutions was subjected to $N_2$ circulation for 14 hours at room temperature and was then tested for corrosion inhibition by suspending a carbon steel test coupon in the test solution and by bubbling continuously at 103°C for 8 days 100% by volume $CO_2$ at 0.1 mPa through the solution at a rate of 500 cc per minute.

The corrosion rates of each solution, in mm per year, were measured after 8 days, with with results indicated in Table III.

TABLE III

| Test solution | Corrosion rate (mm/year) |
|---|---|
| G (control) | 0.51 |
| H | 0.002 |

The data show that the corrosion was essentially nil for solution H of this invention as opposed to the control solution G which shows substantial corrosion.

Example 4

External addition of polysulfide salt for amine scrubbing process with $CO_2$ and $H_2S$

The solutions G and H of Example 3 were employed as follows: Both solutions G and H were subjected to $N_2$ circulation for 14 hours at room temperature before testing. In addition, to build a better film of solution X, solution H was heated in a $N_2$ atmosphere to 121°C and maintained at this operating temperature for 3 days prior to introducing the corrosive gases. Each solution was tested for corrosion inhibition by suspending a carbon steel test coupon in the test solution and by bubbling continuously at 121°C for 1.7 days a stream of 60% $CO_2$, 1% $H_2S$ and 39% $N_2$ by volume at 0.1 mPa through the solution at a rate of 500 cc per minute.

The corrosion rates of each solution, in mm per year, were measured after 8 days, with the results indicated in Table IV.

TABLE IV

| Test solution | Corrosion rate (mm/year) |
|---|---|
| G (control) | 0.178 |
| H | nil |

The data show that the corrosion was much greater in the control solution (G) than in the solution (H) containing the corrosion inhibitor of this invention.

Similar results as observed in Example 3 were obtained using a passivation and corrosion unit containing an absorption zone equipped with means for solution recirculation similar to the unit of Figure 1 discussed below but having no regeneration unit.

It is expected as shown previously with other inhibitor systems that similar results as reported above would be obtained if the above corrosion inhibitors were tested in a pilot plant gas treating unit having an absorption zone, a regeneration zone and a reboiler, such as that described below.

A simplified schematic drawing of a typical gas treating unit which would be used for such tests is shown in Figure 1. In this drawing, piping, equipmênt, instrumentation and valves not necessary for an understanding of the present invention have been omitted for clarity. In this figure, acid-containing gas enters absorption zone 10 through inlet 2 located near the base. Scrubbing or absorbing solution enters absorption zone 10 near the top through line 44. Absorption zone 10 may be a packed, trayed or similar type column in which the upwardly flowing gas stream and the downwardly flowing scrubbing solution are effectively contacted. After the removal of at least a portion of the acidic compounds from the gas stream, the gas stream leaving absorption zone 10 passes through line 12, condenser 14 and knock-out drum 16 for further processing (not shown). The absorbing solution enriched in acidic compounds passes from the base of absorption zone 10 though line 18 into flash zone 20. Vapor passes from flash zone 20 through line 22, condenser 24 and knock-out drum 26 for further treatment (not shown). The non-vaporized absorbing solution passes from flash drum 20 through line 28 into regeneration zone 30 wherein acidic compounds are stripped from the absorbing solution, passing out of zone 30 through line 32, condenser 34, and knock-out drum 36 for further processing (not shown). Absorbing solution from the base of regeneration zone 30 passes through line 38 into reboiler zone 40. A fraction of the absorbing solution entering reboiler zone 40 is vaporized and returned to regeneration zone 30 via line 42, while the remainder is returned to absorption zone 10 by line 44 after passing through cooler 45, and heater 47 before and after pump 49, respectively. Steam or other heat transfer material enters reboiler 40 through line 46 and leaves through line 48.

As used hereinafter, scrubbing solution which has been stripped of acidic compounds is termed "lean" solution, while scrubbing solution which contains a significant quantity of absorbed acidic compound is "rich" solution. To conduct corrosion tests corrosion coupons 60 would be installed in the base of absorption zone 10 to measure the corrosion rate of the rich solution in absorption zone 10, while a corrosion probe and coupon assembly 62 would be installed in transfer line 18 to monitor the corrosion of rich solution being transferred to regeneration zone 30. Corrosion probe and coupon assemblies 64 in the hot lean solution and 66 in the cold lean solution would be installed in transfer line 44 to monitor the corrosion rate in the lean absorbing solution returned to the absorption zone. Corrosion tubing velocity sections 68 and 69 would be installed in lines 44 and 18, respectively, to measure the effect of increased velocity on the corrosion rate in the lean and rich solutions, respectively.

From the aforementioned it can be seen that the corrosion inhibitor disclosed herein provides effective corrosion protection for alkaline systems. The inhibitor herein is particularly suitable for aqueous acid gas scrubbing operations, minimizing corrosion of carbon steel and other commonly used construction materials at temperatures in the range of 37.8—148.9°C, and being compatible with the $CO_2$ and/or $H_2S$ and $H_2$ in the gas feed.

**Claims**

1. A process for removing acidic gases from a gaseous stream containing the same, wherein said gaseous stream is contacted at an elevated operating temperature with an amine-containing scrubbing solution containing an effective amount of an additive to inhibit corrosion of metal contacted by the scrubbing solution, characterised by:

(1) the scrubbing solution comprising either

(A) an amine, or

(B) at least one alkali metal salt or hydroxide and an activator therefor selected from (i) compounds having the structure

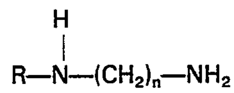

where R is a secondary or tertiary alkyl group and n is the integer 2, 3 or 4.

(ii) compounds having the structures

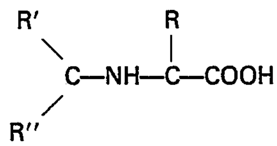

or

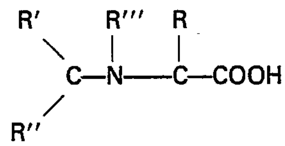

wherein R is hydrogen or methyl, and R′ and R″ are each selected from:

(a) substituted or unsubstituted, linear or branched alkyl radicals having one to twenty carbon atoms; or

(b) substituted or unsubstituted alkylene radicals together having three to six carbon atoms and combined to form a cyclic ring: or

(c) substituted or unsubstituted cycloalkyl radicals having from four to eight ring carbon atoms; or

(d) substituted or unsubstituted hydroxyalkyl radicals, linear or branched, having from one to twenty carbon atoms; or

(e) substituted or unsubstituted aralkyl radicals having from seven to twenty carbon atoms, and where R‴ is selected from substituted or unsubstituted linear alkyl radicals having from one to twenty carbon atoms; and

(2) the corrosion inhibitor comprising either (a) an ammonium or alkali metal polysulphide or (b) a mixture of an ammonium or alkali metal sulphide and elemental sulphur.

2. A process as claimed in Claim 1, wherein the amine is sterically hindered.

3. A process as claimed in Claim 2, wherein the scrubbing solution comprises an aminoether alcohol having a $pK_a$ value greater than 8.6.

4. A process as claimed in Claim 3, wherein the said $pK_a$ value is in the range of 9.5 to 10.6.

**Patentansprüche**

1. Verfahren zur Entfernung von sauren Gasen aus einem diese enthaltenden gasförmigen Strom, bei dem der gasförmige Strom bei einer erhöhten Betriebstemperatur mit einer aminhaltigen Gaswaschlösung kontaktiert wird, welche eine wirksame Menge eines Additivs enthält, um die Korrosion des mit der Gaswaschlösung in Kontakt kommenden Metalles zu hemmen, dadurch gekennzeichnet, daß

(1) die Gaswaschlösung entweder

A) ein Amin oder

B) mindestens eine Alkalimetallsalz oder -hydroxid und einen Aktivator dafür enthält, welcher aus

(i) Verbindungen der Struktur

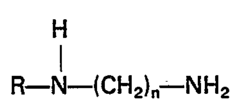

in der R eine sekundäre oder tertiäre Alkylgruppe ist und n die ganze Zahl 2, 3 oder 4 ist, und

(ii) Verbindungen der Strukturen

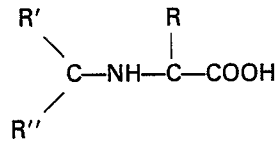

oder

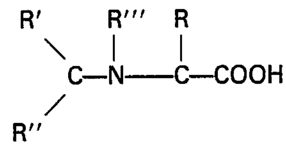

ausgewählt ist, in denen R Wasserstoff oder Methyl ist, und R′ und R″ jeder aus

(a) substituierten oder unsubstituierten linearen oder verzweigten Alkylresten mit 1 bis 20 Kohlenstoffatomen oder

(b) substituierten oder unsubstituierten Alkylenresten, welche zusammen 3 bis 6 Kohlenstoffatome aufweisen und unter Bildung eines cyclischen Ringes verbunden sind, oder

(c) substituierten oder unsubstituierten Cycloalkylresten mit 4 bis 8 Ringkohlenstoffatomen oder

(d) substituierten oder unsubstituierten linearen oder verzweigten Hydroxyalkylresten mit 1 bis 20 Kohlenstoffatomen oder

(e) substituierten oder unsubstituierten Aralkylresten mit 7 bis 20 Kohlenstoffatomen ausgewählt sind und R‴ aus substituierten oder unsubstituierten linearen Alkylresten mit 1 bis 20 Kohlenstoffatomen ausgewählt ist und

(2) der Korrosionsinhibitor entweder (a) ein Ammonium- oder Alkalimetallpolysulfid oder (b) eine Mischung aus einem Ammonium- oder Alkalimetallsulfid und elementarem Schwefel umfaßt.

2. Verfahren nach Anspruch 1, bei dem das Amin sterisch gehindert ist.

3. Verfahren nach Anspruch 2, bei dem die Gaswaschlösung einen Aminoetheralkohol mit einem $pK_a$-Wert von mehr als 8,6 enthält.

4. Verfahren nach Anspruch 3, bei dem der $pK_a$-Wert im Bereich von 9,5 bis 10,6 liegt.

**Revendications**

1. Procédé pour éliminer les gaz acides d'un courant de gaz contenant lesdits gaz acides dans lequel ledit courant de gaz est mis en contact à une température de travail élevée avec une solution d'épuration contenant une amine renfermant une quantité efficace d'un additif pour inhiber la corrosion de métal mis au contact de la solution d'épuration, caractérisé en ce que:

(1) la solution d'épuration renferme soit

(A) une amine, soit

(B) au moins un sel ou un hydroxide de métal alcalin et un activateur choisi parmi

(i) les composés répondant à la structure

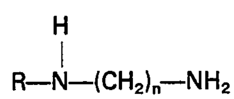

où R est un radical alkyle secondaire ou tertiaire et n est un nombre entier 2, 3 ou 4.

(ii) les composés répondant aux structures:

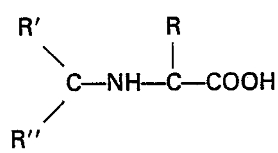

ou

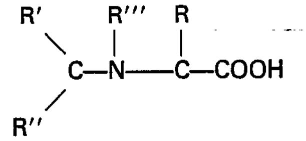

dans lesquelles R est de l'hydrogène ou un radical méthyle et R' et R'' sont chacun choisis parmi:

(a) les radicaux alkyles linéaires ou ramifiés substitués ou non substitués ayant de 1 à 20 atomes de carbone, ou

(b) les radicaux alkylènes substitués ou non substitués ayant 3 à 6 atomes de carbone et combinés pour former un cycle, ou

(c) les radicaux cycloalkyles substitués ou non substitués ayant de 4 à 8 atomes de carbone dans le cycle ou

(d) les radicaux hydroxyalkyles substitués ou non substitués linéaires ou ramifiées ayant de 1 à 20 atomes de carbone, ou

(e) les radicaux aralkyles substitués ou non substitués ayant de 7 à 20 atomes de carbone et où R''' est choisi à partir des radicaux alkyles linéaires substitués ou non substitués ayant de 1 à 20 atomes de carbone, et

(2) l'inhibiteur de corrosion comprend soit (a) un polysulfure d'ammonium ou de métal alcalin ou (b) un mélange d'un sulfure d'ammonium ou de métal alcalin et de soufre élémentaire.

2. Procédé selon la revendication 1 dans lequel l'amine est une amine à empêchement stérique.

3. Procédé selon la revendication 2 dans lequel la solution d'épuration renforme un aminoéther-alcool ayant un $pK_a$ supérieure à 8,6.

4. Procédé selon la revendication 3 dans lequel la valeur du $pK_a$ est comprise dans la gamme de 9,5 à 10,6.

GAS TREATING UNIT FLOW DIAGRAM

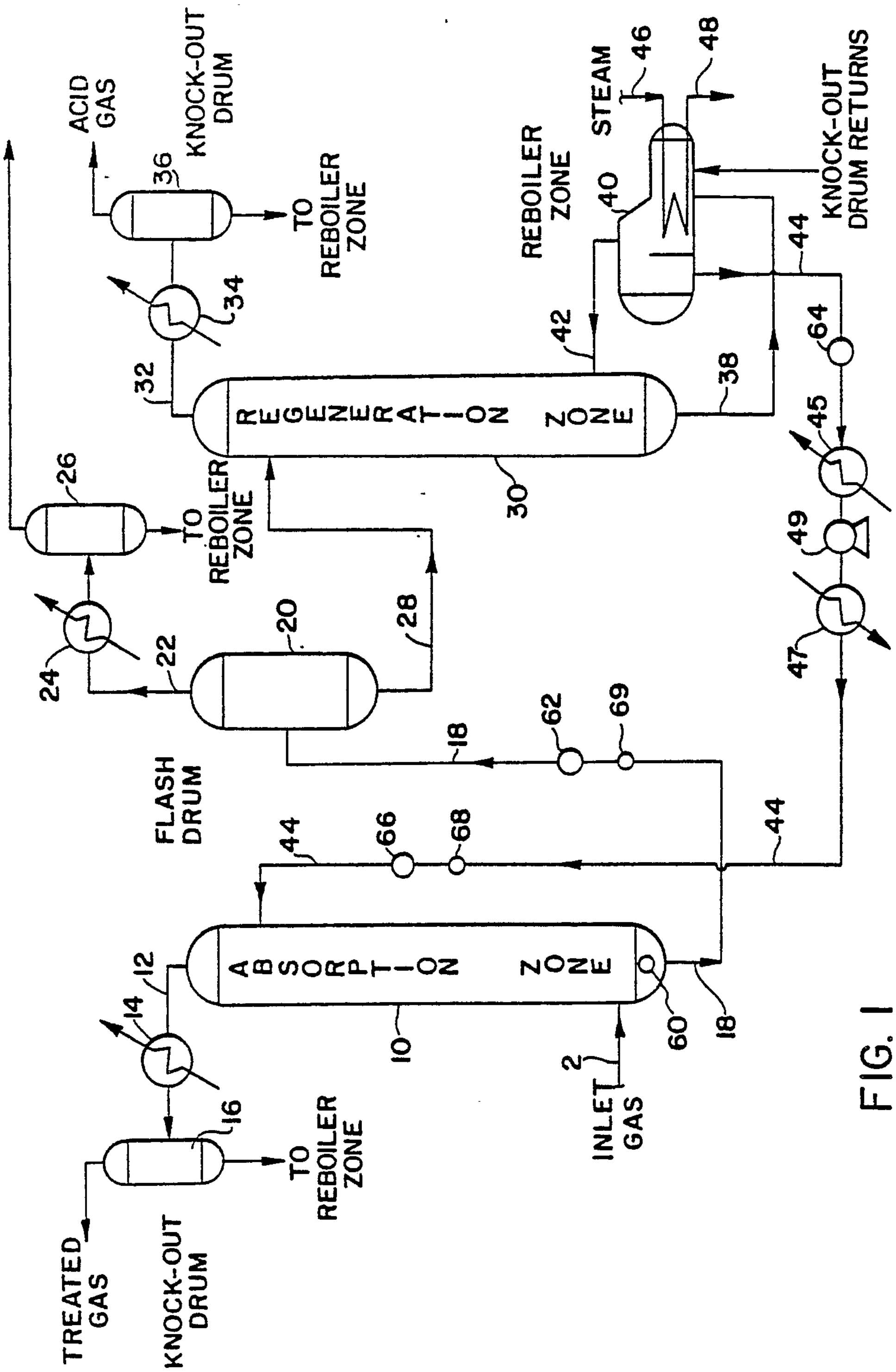

FIG. I